# EUROPÄISCHE PATENTSCHRIFT

(11) **EP 0 755 584 B1**
(45) Veröffentlichungstag und Bekanntmachung des Hinweises auf die Patenterteilung: **14.04.1999**
(21) Anmeldenummer: 95915864.3
(22) Anmeldetag: 11.04.1995
(51) Int. Cl.: H02K 5/14

(54) **STROMZUFÜHRUNGSANORDNUNG FÜR EINEN ELEKTROMOTOR MIT VIER BÜRSTEN**
POWER SUPPLY SYSTEM FOR AN ELECTRIC MOTOR WITH FOUR BRUSHES
SYSTEME D'ALIMENTATION ELECTRIQUE DESTINE A UN MOTEUR ELECTRIQUE COMPORTANT QUATRE BALAIS

(30) Priorität: 11.04.1994 DE 4412319
(43) Veröffentlichungstag der Anmeldung: 29.01.1997
(73) Patentinhaber: ITT Automotive Europe GmbH, 60488 Frankfurt am Main (DE)
(72) Erfinder: KIEHNLE, Günther, D-75031 Eppingen (DE); BERND, Walther, D-74321 Bietigheim-Bissingen (DE)
(74) Vertreter: Dreiss, Fuhlendorf, Steimle & Becker
(86) Internationale Anmeldenummer: EP9501328
(87) Internationale Veröffentlichungsnummer: WO9528029

(56) Entgegenhaltungen:
- US-A- 4 845 396
- US-A- 4 926 075
- US-A- 5 067 905

## Beschreibung

Die Erfindung bezieht sich auf eine Stromzuführungsanordnung für einen Elektromotor mit vier Bürsten, nach dem Oberbegriff des Anspruchs 1 (US-A-4 845 396).

Häufig wird vor allem bei Gleichstrommotoren, die bei hohen Stromstärken betrieben werden, der Kollektor mit vier Kohlen beschaltet, von denen jeweils zwei parallel geschaltet sind. Nur eine derartige Anordnung garantiert eine gute Funktionssicherheit.

Um die vier Bürsten kontaktieren zu können, wird in der EP 0 291 765 B1 vorgeschlagen, zwei Stromschienen vorzusehen, die aus einem Blech ausgestanzt worden sind, und jeweils zwei Bürsten mit einer Stromschiene zu kontaktieren.

Weiterhin wird vorgeschlagen, jeweils eine Stromschiene und die dazugehörigen Bürsten auf jeweils eine Trägerplatte anzuordnen, und die beiden Teilträgerplatten anschließend zusammenzustecken, so daß die Bürsten und die zugehörigen Stromschienen in zwei unterschiedlichen Ebenen angeordnet sind. Es ist ohne weiteres ersichtlich, daß dies zu einer vergrößerten axialen Baulänge des Elektromotors führt.

Zwar ist in der DE-OS 39 36 672 vorgeschlagen, alle vier Bürsten auf einer Trägerplatte in einer Ebene anzuordnen, dafür aber die Stromzuführung nicht über ausgestanzte Stromschienen erfolgen zu lassen, sondern über flexible Leitungen, die auf der Trägerplatte verlegt sind. Hier besteht der offensichtliche Nachteil, daß die Montage der Stromzuführung aufwendig ist, da mindestens vier Leitungen zunächst zugeschnitten und abisoliert und sodann auf der Trägerplatte in entsprechenden Halteösen verlegt werden müssen.

Die Erfindung beruht daher auf der Aufgabe, ein System aus vier Bürsten und insbesondere die dazugehörige Stromzuführung zu entwickeln. Das System soll in axialer Richtung kurz bauen und leicht zu montieren sein.

Dazu wird vorgeschlagen, eine Stromzuführungsanordnung derart auszugestalten, daß zwei Stromschienen vorgesehen sind, wobei jede Stromschiene von je zwei Bürsten kontaktiert wird. Die Stromschienen werden in einer Ebene angeordnet, wobei an mindestens einer Stromschiene eine Kontaktfahne über eine Knickstelle angeformt ist, so daß die Fahne aus der Stromschienenebene aufknickbar ist. Weiterhin ist die Fahne (Brückenfahne) so geformt, daß nach dem Aufknicken ein Arm der Fahne über die andere Stromschiene hinwegreicht.

An diesem Arm kann nun die Litze der entsprechenden Bürste leitend befestigt werden, ohne daß die Gefahr besteht, daß die Litze die andere Stromschiene kontaktiert.

Es wird weiterhin vorgeschlagen, daß an die Stromschienen weitere Fahnen angeformt sind, die ebenfalls aus der Stromschienenebene ausknickbar sind.

Dies hat den Vorteil, daß die Litzen der Bürsten aus der Stromschienenebene herausgeführt werden, so daß eine zusätzliche Isolierung der Litzen zur Vermeidung von Kurzschlüssen nicht notwendig ist.

Die Stromschienen bilden jeweils Halbkreise, die über Kontaktbrücken miteinander verbunden sind und auf diese Weise einen geschlossenen Kreis bilden. Die Kontaktbrücken werden nach der Befestigung der Schienen auf die Bürstenhalterplatte durchstoßen, so daß die beiden Schienen elektrisch voneinander isoliert sind.

Die Schienen werden zusammen mit den Kontaktfahnen aus einem Blech ausgestanzt, wobei in der ausgestanzten Form die Brückenfahne nach außen weist, während die drei anderen Fahnen nach innen weisen. Dadurch ergibt sich eine gute Ausnutzung des Materials.

Nach der Montage der Stromschienen und der Bürstenhalter auf einer Trägerplatte befinden sich die Bürstenhalter alle innerhalb des Kreises, der durch die beiden Stromschienen gebildet wird.

Im folgenden soll anhand eines Ausführungsbeispiels, dargestellt in zwei Figuren, die Erfindung näher erläutert werden.
- Figur 1: zeigt das aus einem Blech ausgestanzte Stromschienensystem,
- Figur 2: die Draufsicht auf eine Trägerplatte mit dem in der Figur 1 dargestellten Stromführungssystem und den Bürstenhaltern.

Das Stromführungssystem besteht aus einer ersten Schiene 1 und einer zweiten Schiene 2. Beide Schienen schließen in etwa einen Halbkreis ein und bilden zusammen einen Vollkreis.

An zwei Stellen sind Kontaktbrücken 7 und 8 zwischen den Schienen vorgesehen, die nach der Aufbringung der Schienen auf die Trägerplatte unterbrochen werden. An jeder Schiene sind zwei Fahnen 3, 4 bzw. 5, 6 angeordnet.

Die Beschreibung der Fahnen erfolgt anhand der Brückenfahne 3, gilt aber in entsprechender Weise auch für die weiteren Fahnen 4, 5, 6.

Jede Fahne ist L-förmig, wobei der eine Schenkel den Kontaktarm 3' und der andere Schenkel den Standarm 3'' bilden. Das Ende des Standarmes 3'', das nicht in den Kontaktarm 3' übergeht, ist über eine Knickstelle 12 an die erste Schiene 1 angeformt.

An der Knickstelle 12 kann die Fahne 3 aus der Schienenebene herausgeknickt werden, so daß der Standarm 3'' senkrecht zur Schienenebene steht und der Kontaktarm 3' sich parallel zur Schienenebene aber oberhalb von ihr erstreckt.

Bei der hier erläuterten Brückenfahne 3 erstreckt sich der Kontaktarm 3' über die zweite Schiene 2. Auf diese Weise kann eine Bürste, die innerhalb des Schienensystems liegt, leitend mit dem Kontaktarm 3' und damit mit der ersten Schiene verbunden werden, ohne daß eine leitende Verbindung zur zweiten Schiene hergestellt wird.

Wie schon erwähnt, sind die weiteren Fahnen 4, 5, 6 in entsprechender Weise ausgebildet, mit dem Unterschied, daß nach dem Aufknicken der Fahnen die Kontaktarme nicht über eine Schiene hinwegreichen.

Um eine günstige Materialausnutzung des Stanzmaterials zu erzielen, weist der Standarm 3'' der Brückenfahne 3 in der Stanzebene nach außen, während die weiteren Arme 4, 5, 6 nach innen weisen.

Jede Stromschiene verfügt weiterhin über eine Stromzuführungslasche 9 bzw. 10, die nach außen weist, und in der Bildebene betrachtet nach unten weggeknickt werden kann.

Zur Befestigung der Schienen, sind mehrere Befestigungslaschen 11, 11' vorgesehen, die zunächst nach unten weggeknickt werden und in entsprechende Löcher in der Trägerplatte eingesteckt werden können. Dort werden sie wiederum um 90° gebogen, so daß die Schienen sicher auf der Trägerplatte gehalten werden.

Wie schon erwähnt, werden die Schienen, die Kontaktbrücken, die Fahne sowie die Stromzuführungslaschen und die Befestigungslaschen aus einem Blech ausgestanzt; die Stanzform der aufknickbaren Teile ist gestrichelt angedeutet.

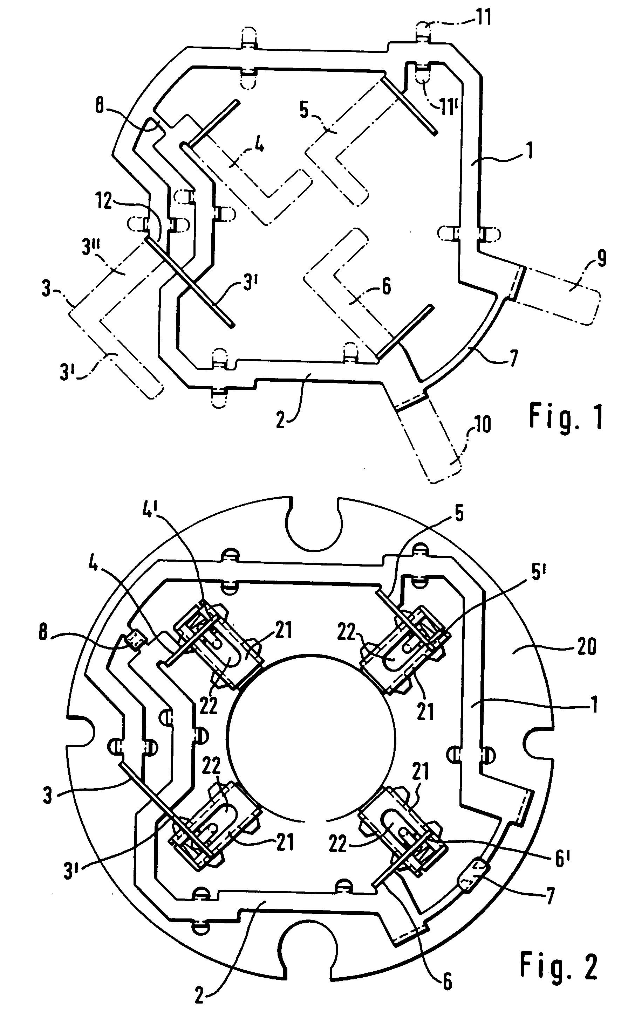

In der Figur 2 ist eine Trägerplatte 20 gezeigt. Diese ist in der Mitte unterbrochen. Die zentrale Unterbrechung dient der Aufnahme des Kollektors.

Um den Kollektor herum sind vier Bürstenhalter 21 angeordnet, die je eine Bürste 22 aufnehmen. Um die Bürstenhalter 21 herum sind die Schienen 1, 2 gemäß Figur 1 angeordnet. Die Kontaktbrücken 7 und 8 sind unterbrochen. Die Kontaktarme 3', 4', 5' und 6' der aufgeknickten Fahnen 3, 4, 5, 6 befinden sich oberhalb der ihnen jeweils zugeordneten Bürsten. Genauer gesagt, befinden sich die Kontaktarme oberhalb der radial äußeren Enden der Bürstenhalter, so daß die dort herausragenden Bürstenlitzen lediglich aus der Trägerplattenebene heraus nach oben geführt werden müssen, um mit den Kontaktarmen leitend verbunden werden zu können. Die Verbindung kann durch Schweißen oder Löten hergestellt werden. Man erkennt, daß jeweils zwei diametral gegenüberliegende Bürsten jeweils eine Schiene kontaktieren.

## Patentansprüche

1. Stromzuführungsanordnung für einen vier Bürsten aufweisenden Elektromotor, mit zwei Stromschienen (1, 2), wobei jede Stromschiene mittels Bürstenhaltern (21) von je zwei Bürsten (22) kontaktiert ist, die Stromschienen (1, 2) kreisbildend auf einer Trägerplatte (20) in einer Ebene angeordnet sind und an mindestens einer Stromschiene (1) eine Kontaktfahne (3) so angeformt ist, daß die Kontaktfahne (3) aus der Stromschienenebene ausknickbar ist, dadurch **gekennzeichnet**, daß die Bürstenhalter (21) sich ebenfalls auf der Trägerplatte (20) innerhalb des von den Stromschienen (1, 2) gebildeten Kreises befinden und die Kontaktfahne (3) so geformt ist, daß nach dem Aufknicken ein Arm (3') der Kontaktfahne (3) über die andere Stromschiene (2) hinwegreicht.

2. Stromzuführungsanordnung nach Anspruch 1, dadurch **gekennzeichnet**, daß an die Stromschienen (1, 2) weitere Fahnen (4, 5, 6) angeformt sind, die ebenfalls aus der Stromschienenebene ausknickbar sind.

3. Stromzuführungsanordnung nach Anspruch 1, dadurch **gekennzeichnet**, daß die Anordnung aus zwei Stromschienen (1, 2) besteht, die jeweils Halbkreise bilden, die über Kontaktbrücken (7, 8) miteinander verbunden sind, so daß auf diese Weise ein geschlossener Kreis gebildet wird, wobei die Kontaktbrücken ausgebildet sind, nach der Befestigung der Schienen auf einer Bürstenhalterplatte durchstoßen zu werden.

4. Stromzuführungsanordnung nach Anspruch 2, dadurch **gekennzeichnet**, daß die Fahnen L-förmig ausgebildet sind.

5. Stromzuführungsanordnung nach Anspruch 2, dadurch **gekennzeichnet,** daß das System aus Schienen (1, 2) und Fahnen (3, 4, 5, 6) aus einem Blech ausgestanzt ist, wobei die Fahne (3) nach außen weist, während die drei anderen Fahnen (4, 5, 6) nach innen weisen.

## Claims

1. A power supply configuration for an electric motor having four brushes, comprising two conductor rails (1, 2), each of said two conductor rails to be contacted by two brushes via brush holders (21), said conductor rails (1, 2) are arranged in a single plane on a support plate (20) forming a circle, and a first contact lug (3) is molded onto at least one (1) of said conductor rails so that contact lug (3) can be bent out from said plane of said two conductor rails, characterized in that the brush holders (21) are located inside the circle of the conductor rails (1, 2) on the support plate (20) also and said contact lug (3) is formed so that after being bent an arm (3') of said contact lug (3) extends away over the other conductor rail (2).

2. The power supply configuration according to claim 1, characterized in that further contact lugs (4, 5, 6), are molded onto the two conductor rails (1, 2), which can be bent out from said plane of said two conductor rails.

3. The power supply configuration according to claim 1, characterized in that the configuration consists of two conductor rails (1, 2), each defines a semi-circle shape and said two conductor rails are connected to one another by contact bridges (7, 8) so that said connected two conductor rails define a closed-circle shape, and wherein said contact bridges are constructed to be penetrated after said two conductors rails are fastened to a brush holder plate.

4. The power supply configuration according to claim 2, said characterized in that lugs are L-shaped.

5. The power supply configuration according to claim 2, said characterized in that the system comprising the rails (1, 2) and said lugs (3, 4, 5, 6) are punched out of sheet metal, and wherein said lug (3) points outward, and the three other lugs (4, 5, 6) point inward.

## Revendications

1. Système d'alimentation électrique destinée à un moteur électrique comportant quatre balais, comprenant deux barres conductrices (1, 2), dans laquelle chaque barre conductrice est contactée au moyen de porte-balais (21) de deux balais (22) chacun, les barres conductrices (1, 2) sont agencées en forme de cercle sur une plaque de support (20) selon un plan et sur au moins une barre conductrice (1) un drapeau de contact (3) est formé de sorte que le drapeau de contact (3) puisse être déployé à l'extérieur du plan des barres conductrices, **caractérisé** en ce que les porte-balais (21) se trouvent aussi sur la plaque de support (20) à l'intérieur du cercle formé par les barres conductrices (1, 2) et le drapeau de contact (3) est formé de sorte qu'après déploiement un bras (3') du drapeau de contact (3) passe par-dessus l'autre barre conductrice (2).

2. Système d'alimentation électrique selon la revendication 1, **caractérisé** en ce que sur les barres conductrices (1, 2) sont formés des drapeaux supplémentaires (4, 5, 6) qui peuvent aussi être déployés à l'extérieur du plan des barres conductrices.

3. Système d'alimentation électrique selon la revendication 1, **caractérisé** en ce qu'il comprend deux barres conductrices (1, 2) qui forment chacune des demi-cercles reliés l'un à l'autre par l'intermédiaire de ponts de contact (7, 8), de sorte que de cette façon un circuit fermé est formé, dans lequel les ponts de contact sont conçus pour être poussés transversalement après fixation des barres sur une plaque porte-balais.

4. Système d'alimentation en courant selon la revendication 2, **caractérisée** en ce que les drapeaux sont réalisés sous une forme d'un L.

5. Configuration d'alimentation en courant selon la revendication 2, **caractérisée** en ce que le réseau de barres (1, 2) et de drapeaux (3, 4, 5, 6) est découpé dans une tôle, le drapeau (3) étant orienté vers l'extérieur tandis que les trois autres drapeaux (4, 5, 6) sont orientés vers l'intérieur.
